# EUROPEAN PATENT APPLICATION

(11) **EP 4 671 227 A1**
(43) Date of publication of application: **31.12.2025**
(21) Application number: 24760193.3
(22) Date of filing: 13.02.2024
(51) Int. Cl.: C04B 35/622, C04B 35/101

(54) **MANUFACTURING METHOD FOR HEAT TREATMENT JIG**

(30) Priority: 21.02.2023 JP 2023025379
(71) Applicant: TOKYO YOGYO KABUSHIKI KAISHA, Tajimi-shi, Gifu-ken 507-8607 (JP)
(72) Inventor: ISHIMARU, Shimon, Tajimi-shi, Gifu 507-0818 (JP); KOIKE, Yasuta, Tajimi-shi, Gifu 507-0818 (JP); KAMESHIMA, Satoru, Ena-shi, Gifu 507-0818 (JP)
(74) Representative: Winter, Brandl - Partnerschaft mbB
(86) International application number: PCT/JP2024/004763
(87) International publication number: WO 2024/176891

(57) **Abstract**

An object is to achieve a manufacturing method of manufacturing a heat treatment jig by using a fired product, which has already been fired, as a raw material. A method of manufacturing a heat treatment jig of the present invention includes: a fired product-derived raw material forming step of forming a fired product-derived raw material by pulverizing a lithium-containing fired product that has Al₂O₃, SiO₂, and MgO as main components and contains a lithium-containing compound; a fired raw material preparing step of preparing raw materials to be fired, the raw materials to be fired including the fired product-derived raw material that has been obtained in the fired product-derived raw material forming step as part or a whole of raw materials and including Al₂O₃, SiO₂, and MgO at a predetermined ratio as main components; a kneading step of kneading the raw materials to be fired that have been prepared in the fired raw material preparing step; a molding step of molding the raw materials to be fired that have been kneaded in the kneading step; and a firing step of firing the raw materials to be fired that have been molded in the molding step under predetermined firing conditions.

## Description

### Technical Field

The present invention relates to a method of manufacturing a heat treatment jig.

### Background Art

A heat treatment jig, such as a heat treatment container disclosed in Patent Literature 1 below, has hitherto been used for heat treatment in, for example, the manufacturing of an active material for a lithium battery.

The heat treatment container disclosed in Patent Literature 1 below is a bath-like container including a sheet-shaped bottom portion and a vertically arranged sheet-shaped wall portion formed on the entire peripheral edge portion of the bottom portion, which is formed by firing mixed powder containing alumina powder and the like. In the invention disclosed in Patent Literature 1, the mixed powder to be used for forming the heat treatment container contains 5% to 45% of alumina powder, 0% to 35% of mullite powder, 5% to 40% of cordierite powder, and 5% to 30% of spinel powder when the total mass thereof is defined as 100%. The heat treatment container formed by using such mixed powder exhibits a characteristic of being excellent in reaction resistance.

### Citation List

### Patent Literature

[PTL 1] JP 2014-227327 A

### Summary of Invention

### Technical Problem

Here, it has been common practice to form a heat treatment jig like the heat treatment container disclosed in Patent Literature 1 above by using raw materials that have not been fired (unfired raw materials) including alumina, mullite, and cordierite. In view of effective utilization of resources, however, it is desired that not only the unfired raw materials but also other materials be usable as raw materials for a heat treatment jig.

As a result of extensive investigations conducted based on such findings, the inventors of the present invention have found that the use of, for example, a fired product, which has already been fired, as a raw material for a heat treatment jig could contribute to the effective utilization of resources.

Thus, the present invention has an object to achieve a manufacturing method of manufacturing a heat treatment jig by using a fired product, which has already been fired, as a raw material.

### Solution to Problem

(1) In order to achieve the above-mentioned object, according to the present invention, there is provided a method of manufacturing a heat treatment jig, the method including: a fired product-derived raw material forming step of forming a fired product-derived raw material derived from a lithium-containing fired product that has Al₂O₃, SiO₂, and MgO as main components and contains a lithium-containing compound; a fired raw material preparing step of preparing raw materials to be fired, the raw materials to be fired including the fired product-derived raw material that has been obtained in the fired product-derived raw material forming step, as part or a whole of raw materials, and including Al₂O₃, SiO₂, and MgO at a predetermined ratio as main components; a kneading step of kneading the raw materials to be fired that have been prepared in the fired raw material preparing step; a molding step of molding the raw materials to be fired that have been kneaded in the kneading step; and a firing step of firing the raw materials to be fired that have been molded in the molding step under predetermined firing conditions.
(2) In the above-mentioned method of manufacturing a heat treatment jig according to the present invention, the fired product-derived raw material forming step is desirably a step of forming the fired product-derived raw material by pulverizing the lithium-containing fired product.
(3) In the above-mentioned method of manufacturing a heat treatment jig according to the present invention, the raw materials to be fired are desirably prepared so as to include Al₂O₃, SiO₂, and MgO as main components and contain a coarse-grained component with an average particle diameter of from 200 µm to 600 µm, and in the fired raw material preparing step, the fired product-derived raw material is desirably prepared so as to form the coarse-grained component that mainly constitutes the raw materials to be fired.
(4) In the above-mentioned method of manufacturing a heat treatment jig according to the present invention, in the fired raw material preparing step, the raw materials to be fired are desirably prepared by mixing unfired raw materials including alumina, mullite, and cordierite and the fired product-derived raw material obtained in the fired product-derived raw material forming step.
(5) In the above-mentioned method of manufacturing a heat treatment jig according to the present invention, the raw materials to be fired desirably include: alumina within a range of 5 parts by mass or more and 30 parts by mass or less; mullite within a range of 0 parts by mass or more and 30 parts by mass or less; and cordierite within a range of 5 parts by mass or more and 30 parts by mass or less.
(6) In the above-mentioned method of manufacturing a heat treatment jig according to the present invention, the lithium-containing fired product serving as a raw material for the fired product-derived raw material desirably includes: a base material having Al₂O₃, SiO₂, and MgO as main components; and the lithium-containing compound adhering to a surface layer of the base material.

### Advantageous Effects of Invention

According to the present invention, the method of manufacturing a heat treatment jig including use of a composition for a heat treatment jig, which is suitable for providing a heat treatment jig having high durability against temperature changes, and the like, can be provided.

### Brief Description of Drawings

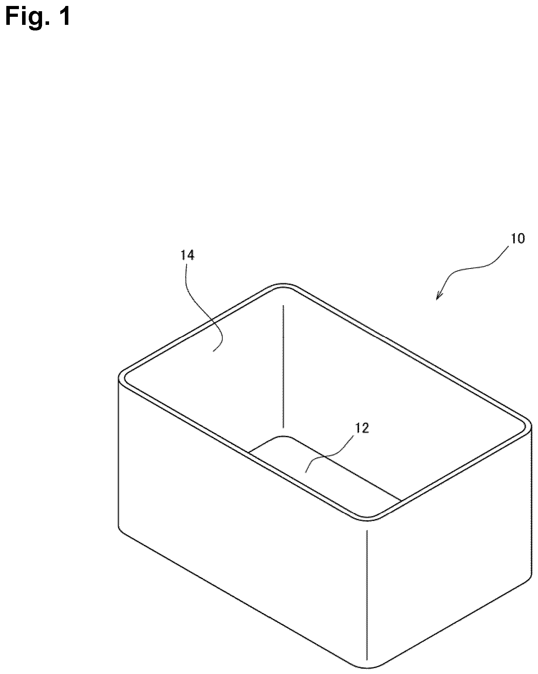

FIG. 1 is a perspective view for illustrating a heat treatment container manufactured by a method of manufacturing a heat treatment jig according to one Example of the present invention.

### Description of Embodiments

A method of manufacturing a heat treatment jig according to one embodiment of the present invention is described below.

The composition for a heat treatment jig taken as an example below in this embodiment can be suitably utilized in the manufacturing of, for example, a general jig for heat treatment, such as a heat treatment container including a so-called saggar or a crucible, a shelf plate, or a setter. In the heat treatment jig of this embodiment, the thickness of a wall portion in its thinnest portion is preferably from 9 mm to 12 mm. In addition, in the heat treatment jig of this embodiment, the thickness of the wall portion in a portion other than the thinnest portion is not particularly limited, but is preferably 16 mm or less.

The method of manufacturing a heat treatment jig according to this embodiment is achieved through a plurality of steps including: a fired product-derived raw material forming step; a fired raw material preparing step; a kneading step; a molding step; and a firing step. The steps are described below further in detail.

### <Fired Product-derived Raw Material Forming Step>

The fired product-derived raw material forming step is a step of forming a fired product-derived raw material derived from a lithium-containing fired product that has Al₂O₃, SiO₂, and MgO as main components and contains a lithium-containing compound. The fired product-derived raw material forming step may be a step of forming the fired product-derived raw material by performing one or a plurality of machining processes or chemical processes on the lithium-containing fired product. The fired product-derived raw material forming step is desirably a step of forming the fired product-derived raw material by, for example, pulverizing the lithium-containing fired product. The fired product-derived raw material, which is a target to be treated in the fired product-derived raw material forming step, may be not only a fired product-derived raw material in which the lithium-containing compound is dispersed and contained in the fired product together with Al₂O₃, SiO₂, and MgO, but also a fired product-derived raw material in which the lithium-containing compound adheres to a surface layer of a base material having Al₂O₃, SiO₂, and MgO as main components. In the fired product-derived raw material forming step, the lithium-containing fired product is desirably pulverized so that the fired product-derived raw material has an appropriate particle size distribution. For example, in the fired product-derived raw material forming step, the pulverization is desirably performed with the particle size being adjusted so that a coarse-grained component with an average particle diameter of from 200 µm to 600 µm is contained as a major component.

### <Fired Raw Material Preparing Step>

The fired raw material preparing step is a step of preparing raw materials to be fired that include the fired product-derived raw material, which has been obtained in the fired product-derived raw material forming step, as part or a whole of raw materials and include Al₂O₃, SiO₂, and MgO at a predetermined ratio as main components. The fired raw material preparing step is a step of preparing raw materials to be fired by mixing unfired raw materials including components such as alumina (Al₂O₃), mullite (3Al₂O₃·2SiO₂) and cordierite (2MgO·2Al₂O₃·5SiO₂) and the fired product-derived raw material obtained in the above-mentioned fired product-derived raw material forming step.

The fired raw material preparing step may also be a step of preparing the raw materials to be fired without using the unfired raw materials including components such as alumina, mullite, and cordierite. In this case, the fired raw material preparing step may be a step of preparing the raw materials to be fired by mixing a predetermined amount of a binder or the like into the fired product-derived raw material obtained in the fired product-derived raw material forming step. As the binder, ammonium alginate, sodium alginate, CMC, or PVA can be suitably used.

Here, part corresponding to the coarse-grained component for constituting the raw materials to be fired is desirably formed of the fired product-derived raw material by preparing the fired product-derived raw material obtained in the above-mentioned fired product-derived raw material forming step as a fired product-derived raw material that has been prepared to have Al₂O₃, SiO₂, and MgO as main components and contain the coarse-grained component with the average particle diameter of from 200 µm to 600 µm.

Further, the raw materials to be fired desirably include the components such as alumina, mullite, and cordierite that are blended at an appropriate blending ratio. For example, the raw materials to be fired desirably include, for example, alumina within a range of 5 parts by mass or more and 30 parts by mass or less, mullite within a range of 5 parts by mass or more and 30 parts by mass or less, and cordierite within a range of 5 parts by mass or more and 30 parts by mass or less.

Further, the raw materials to be fired may also include a component other than alumina, mullite, cordierite, and spinel, which is blended therein.

### <Kneading Step>

The kneading step is a step of kneading the raw materials to be fired that have been prepared in the above-mentioned fired raw material preparing step.

### <Molding Step>

The molding step is a step of molding the raw materials to be fired that have been kneaded in the kneading step. In the molding step, molding of a composition for a heat treatment jig is performed by a molding method, for example, press molding, slip casting, or CIP molding. In terms of productivity, it is preferred that the molding method be press molding.

### <Firing Step>

The firing step is a step of firing the raw materials to be fired that have been molded in the molding step under predetermined firing conditions. The firing conditions in the firing step can be appropriately set. Firing is desirably performed, for example, at a maximum temperature of from 1,250°C to 1,400°C, preferably from 1,280°C to 1,350°C over a predetermined period of time (for example, the raw materials to be fired are retained for six hours or longer after the temperature reaches the maximum temperature). Although a firing process in the firing step can be performed under any appropriate atmosphere, it is preferred that the firing process be performed under the air atmosphere.

The heat treatment jig of this embodiment is manufactured through the preparation, the molding, and the firing of the raw materials to be fired in the above-mentioned steps. A heat treatment container of the present invention is formed of a porous ceramic by firing a mixture of ceramic powders formed of the raw materials to be fired, and thus has heat resistance.

In the method of manufacturing a heat treatment jig of this embodiment, alumina (Al₂O₃) is used mainly to exhibit an effect of improving reaction resistance to a compound to be subjected to heat treatment. Accordingly, the heat treatment jig manufactured by the method of manufacturing a heat treatment jig of this embodiment exhibits high reaction resistance (also referred to as "corrosion resistance") to the compound to be subjected to heat treatment.

As described above, the raw materials to be fired that are used in the method of manufacturing a heat treatment jig of this embodiment include alumina blended therein at a ratio of 5 parts by mass or more and 30 parts by mass or less. With this blending ratio, a heat treatment jig capable of achieving high reaction resistance to the compound to be subjected to heat treatment can be manufactured. When the content ratio of alumina powder in the raw materials to be fired is larger than 30 parts by mass in the method of manufacturing a heat treatment jig of this embodiment, the amounts of other components included in the ceramic powders are relatively reduced, leading to a larger thermal expansion coefficient. As a result, the heat treatment jig is vulnerable to thermal shock, and thus can hardly exhibit desired characteristics.

In the method of manufacturing a heat treatment jig of this embodiment, mullite is used mainly to exhibit an effect of improving thermal shock resistance. Accordingly, when the heat treatment jig is formed by preparing the composition for a heat treatment jig having mullite blended therein as a main component, and firing the resultant composition, improvement in thermal shock resistance can be expected.

As described above, the raw materials to be fired that are used in the method of manufacturing a heat treatment jig of this embodiment include mullite blended therein at a ratio of 5 parts by mass or more and 30 parts by mass or less. With this blending ratio, a heat treatment jig with high thermal shock resistance can be manufactured. In the method of manufacturing a heat treatment jig of this embodiment, when the content ratio of the mullite in the raw materials to be fired is larger than 30 parts by mass, there is a concern in that reactivity to a workpiece may increase. Further, in the method of manufacturing a heat treatment jig of this embodiment, when the content ratio of the mullite is smaller than 5 parts by mass, there is a concern in that the heat treatment jig may easily break under thermal shock.

In the method of manufacturing a heat treatment jig of this embodiment, cordierite (2MgO·2Al₂O₃·5SiO₂) is used mainly to obtain an effect of improving thermal shock resistance. Thus, the heat treatment jig containing cordierite can be expected to exhibit high thermal shock resistance.

The raw materials to be fired that are used in the method of manufacturing a heat treatment jig of this embodiment include cordierite blended therein at a ratio of 5 parts by mass or more and 30 parts by mass or less. With this blending ratio, the heat treatment jig manufactured by the method of manufacturing a heat treatment jig of this embodiment exhibits high thermal shock resistance. When the content ratio of the cordierite in the raw materials to be fired deviates from and falls below the above-mentioned range, the effect of improving thermal shock resistance is reduced in the heat treatment jig. Further, when the content ratio of the cordierite in the raw materials to be fired deviates from and goes beyond the above-mentioned range, the heat treatment jig is liable to be contaminated with the compound to be subjected to heat treatment.

For the raw materials to be fired that are used in the method of manufacturing a heat treatment jig of this embodiment, raw materials to be fired including another constituent material mixed as the component other than alumina, mullite, and cordierite may be used. For example, the raw materials to be fired may contain petalite (LiAlSi₄O₁₀). Petalite, which is a material having an extremely low thermal expansion coefficient in itself, exhibits an effect of improving durability against thermal shock. Further, the use of petalite allows the formation of a hollow texture in the heat treatment jig being a fired product obtained by firing the raw materials to be fired.

It is presumed that the hollow texture as described above results from a mechanism in which, when the raw materials to be fired (composition for a heat treatment jig) are fired at a melting point of petalite or a predetermined temperature close thereto, part of petalite vaporizes and forms voids in a texture of the fired product. Thus, when the raw materials to be fired (composition for a heat treatment jig) contain petalite, an effect in which the voids resulting from petalite inhibit the propagation of cracks formed under the action of thermal shock on the heat treatment jig can be expected. With this effect, a reduction in modulus of elasticity, which may be caused when thermal shock is repeatedly applied to the heat treatment jig, can be suppressed. Thus, the heat treatment jig formed by firing the raw materials to be fired including petalite in addition to alumina, mullite, and cordierite can be expected to have improved thermal shock resistance in comparison to a heat treatment jig manufactured with raw materials to be fired without cordierite. In the raw materials to be fired (composition for a heat treatment jig) of this embodiment, petalite is blended at a ratio of 5 parts by mass or more and 20 parts by mass or less.

The raw materials to be fired that are used in the method of manufacturing a heat treatment jig of this embodiment can include, in addition to alumina, mullite, cordierite, and petalite, another component added as a raw material to be fired (composition for a heat treatment jig). For example, in the method of manufacturing a heat treatment jig of this embodiment, molten silica (SiO₂), silicon carbide (SiC), spinel (MgAl₂O₄), or the like may be contained as a component for constituting the raw materials to be fired.

Molten silica, which is a material having an extremely low thermal expansion coefficient in itself, exhibits an effect of improving durability against thermal shock. Thus, the heat treatment jig formed by firing the raw materials to be fired including molten silica exhibits high thermal shock resistance.

Further, silicon carbide (SiC) has extremely high hardness and heat resistance, and hence exhibits an effect of improving durability against thermal shock. Thus, the heat treatment jig formed by firing the raw materials to be fired including silicon carbide exhibits high thermal shock resistance. Further, silicon carbide has high chemical stability, and hence exhibits an effect of improving reaction resistance to the compound to be subjected to heat treatment. Thus, the heat treatment jig formed by firing the raw materials to be fired including silicon carbide exhibits high reaction resistance (also referred to as "corrosion resistance") to the compound to be subjected to heat treatment.

Spinel (MgAl₂O₄) mainly exhibits an effect of improving reaction resistance. Thus, in the method of manufacturing a heat treatment jig of this embodiment, the heat treatment jig exhibiting high reaction resistance can be manufactured by adding spinel as a raw material to be fired.

### Examples

The method of manufacturing a heat treatment jig of the present invention is specifically described below by way of Examples. First, in these Examples, as samples of the fired product-derived raw material formed by pulverizing the lithium-containing fired product having Al₂O₃, SiO₂, and MgO as main components and containing the lithium-containing compound (hereinafter also referred to as "pulverized raw material") in the fired product-derived raw material forming step, Pulverized Raw Material 1 to Pulverized Raw Material 5 were prepared. The lithium-containing fired product serving as a raw material for Pulverized Raw Material 1 to Pulverized Raw Material 5 all included: a fired product obtained by firing raw materials including alumina, mullite, and cordierite as a base material; and the lithium-containing compound adhering to a surface layer of the base material.

Further, as Comparative Examples, Comparative Example 1 and Comparative Example 2 were each prepared by firing raw material powder of a fired product that had Al₂O₃, SiO₂, and MgO as main components and was free of the lithium-containing compound. Comparative Example 1 and Comparative Example 2 both contained alumina, mullite, and cordierite. Of those samples, the fired product prior to pulverization, which was used as a raw material for Pulverized Raw Material 5, and Comparative Example 2 contained petalite. Further, the fired products prior to pulverization, which were used as raw materials for Pulverized Raw Material 1 to Pulverized Raw Material 4, respectively, and Comparative Example 1 were free of petalite.

For the above-mentioned Pulverized Raw Material 1 to Pulverized Raw Material 5, Comparative Raw Material 1, and Comparative Raw Material 2, X-ray fluorescence analysis (XRF) was performed with the use of an X-ray fluorescence spectrometer (ZSX Primus IV manufactured by RIGAKU Corporation) on the samples produced by a glass bead method. Further, in order to check a content of Li₂O, atomic absorption analysis using AA-7000 manufactured by SHIMADZU Corporation was performed on Pulverized Raw Material 1 to Pulverized Raw Material 5, Comparative Raw Material 1, and Comparative Raw Material 2. The analysis results obtained through the above-mentioned analyses are shown in Table 1.

**[Table 1]**

| | Comparative Example 1 | Pulverized Raw Material 1 | Pulverized Raw Material 2 | Pulverized Raw Material 3 | Pulverized Raw Material 4 | Comparative Example 2 | Pulverized Raw Material 5 |
|---|---|---|---|---|---|---|---|
| Al₂O₃ | 71.6 | 68.8 | 70.1 | 68.0 | 71.4 | 57.7 | 57.6 |
| SiO₂ | 11.4 | 10.4 | 12.5 | 11.6 | 10.9 | 24.5 | 24.6 |
| MgO | 16.1 | 15.4 | 14.8 | 14.2 | 15.8 | 15.6 | 15.3 |
| Li₂O | - | 3.88 | 1.64 | 3.53 | 0.63 | 0.15 | 1.52 |
| SO₃ | - | 0.50 | 0.24 | 0.34 | 0.11 | - | 0.22 |
| Fe₂O₃ | 0.31 | 0.26 | 0.27 | 0.27 | 0.25 | 0.49 | 0.41 |
| TiO₂ | 0.12 | 0.12 | 0.12 | 0.15 | 0.15 | 0.16 | 0.12 |
| CaO | 0.20 | 0.18 | 0.18 | 0.18 | 0.19 | 0.21 | 0.23 |
| Na₂O | 0.10 | 0.10 | 0.12 | 0.14 | 0.12 | 0.08 | 0.11 |
| K₂O | 0.10 | 0.09 | 0.10 | 0.09 | 0.12 | 0.15 | 0.10 |

As shown in Table 1, Pulverized Raw Material 1 to Pulverized Raw Material 5, Comparative Example 1, and Comparative Example 2 all had Al₂O₃, SiO₂, and MgO as main components and contained Fe₂O₃, TiO₂, CaO, Na₂O, K₂O, and the like as impurities derived from the fired product serving as a raw material. Those impurities were each present in a trace amount relative to Al₂O₃, SiO₂, and MgO, which were the main components. Further, in Pulverized Raw Material 1 to Pulverized Raw Material 5, Li₂O, which was considered to be derived from the lithium-containing compound, was detected. Further, in Comparative Example 2, Li₂O, which was considered to be derived from petalite, was detected.

Further, X-ray fluorescence analysis was performed on Sample 1 and Sample 2, which were produced by using Pulverized Raw Material 2 and Pulverized Raw Material 5 among Pulverized Raw Materials shown in Table 1 in accordance with the method of manufacturing a heat treatment jig according to the present invention. The results thereof are shown in Table 2. Further, in Table 2, there are shown examples in which X-ray fluorescence analysis was performed on the fired products of Comparative Example 1 and Comparative Example 2 as Comparative Examples. For the production of Sample 1 and Sample 2, a blending ratio of the unfired raw materials including components such as alumina (Al₂O₃) , mullite (3Al₂O₃·2SiO₂), cordierite (2MgO·2Al₂O₃·5SiO₂) and Pulverized Raw Material 2 or Pulverized Raw Material 5 was adjusted so that the raw materials to be fired prepared in the fired raw material preparing step included Pulverized Raw Material 2 and Pulverized Raw Material 5 at 30% in mass ratio. For each of Sample 1 and Sample 2, two kinds of samples with different particle size distributions of Pulverized Raw Material 2 and Pulverized Raw Material 5 were prepared. Sample 1a and Sample 2a are samples produced with Pulverized Raw Material 2 and Pulverized Raw Material 5 having a particle size falling within a range classified as coarse grains (from 200 µm to 600 µm), respectively. Sample 1b and Sample 2b are samples produced with Pulverized Raw Material 2 and Pulverized Raw Material 5 having a particle size falling within a range classified as fine and medium grains (from 20 µm to 100 µm), respectively.

As shown in Table 2, compositions of the fired products that were produced using Pulverized Raw Material 2 and Pulverized Raw Material 5 were favorably comparable to those of the fired bodies of Comparative Example 1 and Comparative Example 2 and were not greatly different therefrom. Based on those results, it was found that, also when the pulverized raw material formed by pulverizing the lithium-containing fired product containing the lithium-containing compound was used, the fired product having a composition equivalent to that of a fired product like a publicly known related-art saggar, which was obtained by firing raw materials including alumina, mullite, and cordierite, was successfully obtained.

**[Table 2]**

| | Comparative Example 1 | Sample 1 (Sample 1a) | Sample 1 (Sample 1b) | Comparative Example 2 | Sample 2 (Sample 2a) | Sample 2 (Sample 2b) |
|---|---|---|---|---|---|---|
| | | Coarse grains | Fine and medium grains | | Coarse grains | Fine and medium grains |
| Al₂O₃ | 71.6 | 71.3 | 70.6 | 57.7 | 57.0 | 55.2 |
| SiO₂ | 11.4 | 12.3 | 12.7 | 24.5 | 24.9 | 27.2 |
| MgO | 16.1 | 15.3 | 14.8 | 15.6 | 15.0 | 15.6 |
| Li₂O | - | 0.3 | - | 0.2 | 0.6 | - |
| Fe₂O₃ | 0.3 | 0.3 | 0.3 | 0.5 | 0.4 | 0.4 |
| CaO | 0.2 | 0.2 | 0.2 | 0.2 | 0.2 | 0.2 |
| TiO₂ | 0.1 | 0.1 | 0.1 | 0.2 | 0.2 | 0.1 |
| Na₂O | 0.2 | 0.1 | 0.1 | 0.1 | 0.1 | 0.1 |
| K₂O | 0.2 | 0.1 | 0.2 | 0.1 | 0.1 | 0.1 |

Further, physical properties of Samples 1 and Comparative Example 1 described above were examined in terms of: (a) porosity; (b) bulk density; (c) flexural strength; (d) thermal expansion coefficient; (e) modulus of elasticity; and (f) thermal shock resistance. The results thereof are shown in Table 3. Further, testing methods for the physical properties are described below.

**[Table 3]**

| | Comparative Example 1 | Sample 1 (Sample 1a) | Sample 1 (Sample 1b) | Comparative Example 2 | Sample 2 (Sample 2a) | Sample 2 (Sample 2b) |
|---|---|---|---|---|---|---|
| | | Coarse grains | Fine and medium grains | | Coarse grains | Fine and medium grains |
| Porosity [%] | 32.2 | 29.9 | 23.9 | 29.0 | 28.7 | 21.3 |
| Bulk density | 2.23 | 2.29 | 2.41 | 2.09 | 2.12 | 2.33 |
| Flexural strength [MPa] | 5.7 | 6.2 | 11.9 | 12.8 | 11.7 | 14.6 |
| Thermal expansion coefficient (%) | 0.47 | 0.47 | 0.49 | 0.36 | 0.33 | 0.36 |
| Modulus of elasticity [GPa] | 6.8 | 7.8 | 15.9 | 8.5 | 8.7 | 19.2 |
| Thermal shock resistance | Six times or more | Six times or more | Two times | Six times or more | Six times or more | Four times |

### With Regard to (a) Porosity and (b) Bulk Density

The above-mentioned specimens were fired to produce heat treatment containers 10 (saggars). For a cuboidal body with dimensions of from 30 mm to 50 mm, which was formed from part forming a bottom surface of each of the heat treatment containers 10, a porosity and a bulk density were measured by a vacuum method in conformity with JIS R2205.

### (c) With Regard to Flexural Strength

For each of the specimens described above, a product molded into a size of 10 mm by 10 mm by 60 mm was prepared. The resultant specimen was measured for three-point flexural strength in conformity with JIS R1601 at normal temperature and at a length of the support span of 40 mm.

### (d) With Regard to Thermal Expansion Coefficient

A linear thermal expansion coefficient was measured at 1,000°C by a measurement method described in JIS R2207.

### (e) With Regard to Modulus of Elasticity

For each of the specimens described above, a product molded into a sheet shape measuring 100 mm by 50 mm by 10 mm was prepared and was measured for a modulus of elasticity at normal temperature with an elastometer.

### (f) With Regard to Thermal Shock Resistance

A thermal shock resistance test was performed on each of the specimens described above in order to evaluate the progression degree of degradation caused when thermal shock was repeatedly applied to each of the specimens. Specifically, for each of the specimens described above, a product molded into a sheet shape measuring 150 mm by 100 mm by 10 mm was prepared, and the resultant specimen was subjected to a test in which a series of events including (1) heating at 1,100°C for 30 minutes and (2) dropping into water were repeatedly performed six times. The thermal shock resistance test was conducted with visual observation for the presence or absence of cracks in the specimen, which occurred along with a temperature rise (heating) and water cooling (quenching) associated with the above-mentioned events (1) and (2). In Table 3, there is shown the number of cycles of the temperature rise and the quenching after which a crack in each of the specimens was observed. For the specimens in which no cracks were observed after a sixth cycle of the temperature rise and the quenching, "six times or more" is indicated.

As shown in Table 3, Sample 1a that was produced in accordance with the method of manufacturing a heat treatment jig according to the present invention had equivalent characteristics in terms of each of the porosity, the bulk density, the flexural strength, the thermal expansion coefficient, the modulus of elasticity, and the thermal shock resistance in comparison to those of Comparative Example 1.

Specifically, the porosity of Sample 1a was 29.9 [%], whereas the porosity of Comparative Example 1 was 32.2 [%]. Further, the bulk density of Sample 1a was 2.29, whereas the bulk density of Comparative Example 1 was 2.23. The flexural strength of Sample 1a was 6.2 [MPa], whereas the flexural strength of Comparative Example 1 was 5.7 [MPa]. Further, the thermal expansion coefficient was 0.47 [%] for both Sample 1a and Comparative Example 1. The modulus of elasticity of Sample 1a was 7.8 [GPa], whereas the modulus of elasticity of Comparative Example 1 was 6.8 [GPa]. Further, for both Sample 1a and Comparative Example 1, no cracks were observed in the specimens even after the sixth cycle of the temperature rise and the quenching in the thermal shock resistance test, and it was confirmed that both of Sample 1a and Comparative Example 1 had equivalent thermal shock resistance.

Further, the porosity of Sample 1a was 28.7[%], whereas the porosity of Comparative Example 2 was 29.0[%]. Further, the bulk density of Sample 2a was 2.12, whereas the bulk density of Comparative Example 2 was 2.09. The flexural strength of Sample 2a was 11.7 [MPa], whereas the flexural strength of Comparative Example 2 was 12.8 [MPa]. Further, the thermal expansion coefficient of Sample 2a was 0.33 [%], whereas the thermal expansion coefficient of Comparative Example 2 was 0.36 [%]. The modulus of elasticity of Sample 2a was 8.7 [GPa], whereas the modulus of elasticity of Comparative Example 2 was 8.5 [GPa]. Further, for both Sample 2a and Comparative Example 2, no cracks were observed in the specimens even after the sixth cycle of the temperature rise and the quenching in the thermal shock resistance test, and it was confirmed that both of Sample 2a and Comparative Example 2 had equivalent thermal shock resistance.

As described above, Sample 1a and Sample 2a showed equivalent characteristics for each of the physical properties in comparison to Comparative Example 1 and Comparative Example 2. Thus, it was found that the method of manufacturing a heat treatment jig according to the present invention, which included using the pulverized raw material obtained by pulverizing the lithium-containing fired product containing the lithium-containing compound, enabled manufacture of the heat treatment jig having characteristics equivalent to those of the heat treatment jig manufactured with raw materials including alumina, mullite, and cordierite.

Further, when Sample 1b (produced with Pulverized Raw Material 2 having a particle size falling within a range classified as fine and medium grains (from 20 µm to 100 µm)) and Sample 1a (produced with Pulverized Raw Material 2 having a particle size falling within a range classified as coarse grains (from 200 µm to 600 µm)) were compared with each other, Sample 1b had equivalent or superior characteristics in terms of the bulk density, the flexural strength, the thermal expansion coefficient, and the modulus of elasticity. On the other hand, Sample 1b had a porosity of 23.9 [%], which was lower than the porosity of Sample 1a (29.9 [%]) and the porosity of Comparative Example 1 (32.2 [%]). Further, for Sample 1b, a crack was observed in the specimen after a second cycle of the temperature rise and the quenching in the thermal shock resistance test. Thus, it was revealed that Sample 1b also had thermal shock resistance lower than those of Sample 1a and Comparative Example 1.

Similarly, when Sample 2b (produced with Pulverized Raw Material 5 having a particle size falling within a range classified as fine and medium grains (from 20 µm to 100 µm)) and Sample 2a (produced with Pulverized Raw Material 5 having a particle size falling within a range classified as coarse grains (from 200 µm to 600 µm)) were compared with each other, Sample 2b had equivalent or superior characteristics in terms of the bulk density, the flexural strength, the thermal expansion coefficient, and the modulus of elasticity. On the other hand, Sample 2b had a porosity of 21.3 [%], which was lower than the porosity of Sample 2a (28.7 [%]) and the porosity of Comparative Example 2 (29.0 [%]). Further, for Sample 2b, a crack was observed in the specimen after a fourth cycle of the temperature rise and the quenching in the thermal shock resistance test. Thus, it was revealed that Sample 2b also had thermal shock resistance lower than those of Sample 2a and Comparative Example 2.

Based on the above-mentioned test results, it was found that, when a heat treatment jig was manufactured using a pulverized raw material being a fired product-derived raw material, using the fired product-derived raw material (pulverized raw material) that had been prepared to have a particle size falling within a range classified as coarse grains (from 200 µm to 600 µm) was advantageous in improvement in thermal shock resistance.

### Industrial Applicability

The method of manufacturing a heat treatment jig of the present invention can be suitably used for materials for all jigs to be used for a heat treatment, and as a manufacturing method therefor.

### Reference Signs List

10: heat treatment container (heat treatment jig)
12: bottom portion
14: vertical wall

## Claims

1. A method of manufacturing a heat treatment jig, the method comprising:
a fired product-derived raw material forming step of forming a fired product-derived raw material derived from a lithium-containing fired product that has Al₂O₃, SiO₂, and MgO as main components and contains a lithium-containing compound;
a fired raw material preparing step of preparing raw materials to be fired, the raw materials to be fired including the fired product-derived raw material that has been obtained in the fired product-derived raw material forming step, as part or a whole of raw materials, and including Al₂O₃, SiO₂, and MgO at a predetermined ratio as main components;
a kneading step of kneading the raw materials to be fired that have been prepared in the fired raw material preparing step;
a molding step of molding the raw materials to be fired that have been kneaded in the kneading step; and
a firing step of firing the raw materials to be fired that have been molded in the molding step under predetermined firing conditions.

2. The method of manufacturing a heat treatment jig according to claim 1, wherein the fired product-derived raw material forming step is a step of forming the fired product-derived raw material by pulverizing the lithium-containing fired product.

3. The method of manufacturing a heat treatment jig according to claim 1 or 2,
wherein the raw materials to be fired are prepared so as to include Al₂O₃, SiO₂, and MgO as main components and contain a coarse-grained component with an average particle diameter of from 200 µm to 600 µm, and
wherein, in the fired raw material preparing step, the fired product-derived raw material is prepared so as to form the coarse-grained component that mainly constitutes the raw materials to be fired.

4. The method of manufacturing a heat treatment jig according to claim 1 or 2, wherein, in the fired raw material preparing step, the raw materials to be fired are prepared by mixing unfired raw materials including alumina, mullite, and cordierite and the fired product-derived raw material obtained in the fired product-derived raw material forming step.

5. The method of manufacturing a heat treatment jig according to claim 4, wherein the raw materials to be fired include:
alumina within a range of 5 parts by mass or more and 30 parts by mass or less;
mullite within a range of 0 parts by mass or more and 30 parts by mass or less; and
cordierite within a range of 5 parts by mass or more and 30 parts by mass or less.

6. The method of manufacturing a heat treatment jig according to claim 1 or 2, wherein the lithium-containing fired product serving as a raw material for the fired product-derived raw material includes:
a base material having Al₂O₃, SiO₂, and MgO as main components; and
the lithium-containing compound adhering to a surface layer of the base material.
